# DEMANDE DE BREVET EUROPEEN

(11) **EP 0 700 634 A1**
(43) Date de publication de la demande: **13.03.1996**
(21) Numéro de dépôt: 95460031.8
(22) Date de dépôt: 05.09.1995
(51) Int. Cl.: A01K 1/01

(54) **Bac de récupération de lisier**

(30) Priorité: 08.09.1994 FR 9410990
(71) Demandeur: I-TEK SA, F-22250 Tremeur (FR)
(72) Inventeur: Lesnard, Pierre, F-22250 Tremeur (FR)
(74) Mandataire: Le Guen, Louis François

(57) **Abrégé**

L'invention concerne un bac de récupération de lisier qui comporte un fond rectangulaire (1) et une paroi latérale pourvue de deux parties (2) et (3) le long des grands côtés du rectangle et deux parties (4) et (5) le long des petite côtés du rectangle et qui présente un premier plan vertical de symétrie parallèle aux grands côtés (4, 5) du bac et un second plan vertical de symétrie parallèle aux petits côtés (2, 3) du bac qui se croisent au centre du bac. Lesdits plans définissent, dans le fond du bac quatre dièdres qui ont une arête (12.1, 12.2, 12.3 et 12.4), pratiquement horizontale et perpendiculaire à la rigole (7) et qui comporte, chacun, deux faces dont l'une (13.1, 13.2, 13.3 et 13.4) est pratiquement horizontale et descend légèrement de la partie (2, 3) vers l'arête (12.1, 12.1, 12.2, 12.3 et 12.4) et dont l'autre face (14.1, 14.2, 14.3 et 14.4) monte obliquement de l'arête (12.1, 12.2, 12.3 et 12.4) vers l'arête (10, 11).

## Description

La présente invention concerne un bac de récupération de lisier qui est installé sous le caillebotis d'une case de post-sevrage de porcs.

Traditionnellement, une case d'élevage de porcs comprend quatre cloisons et un caillebotis sensiblement horizontal sous lequel est prévu un bac qui peut être incliné afin de faciliter la collecte des excréments dans un caniveau.

Il est connu que les porcelets font en général leurs déjections solides dans les coins de la case, ces déjections solides ne sont alors que très rarement humidifiées par le lisier et sèchent dans ces coins. Il est donc nécessaire de nettoyer le plancher du bac en utilisant des jets d'eau afin de pousser les déjections solides vers le caniveau. Or on sait que les règles antipollution de protection de l'environnement sont très strictes car les excréments même mélangés à de l'eau ne peuvent être rejetés comme de simples eaux usées.

Un objet de la présente invention consiste à prévoir un bac de récupération de manière à ce que les déjections des quatre coins de la case soient au plus vite rincées par l'urine et ne sèchent pas dans les angles, l'urine et l'épais se mélangeant au plus vite.

Le bac de récupération de lisier selon la présente invention comporte un fond rectangulaire et une paroi latérale pourvue de deux parties le long des grands côtés du rectangle et de deux parties le long des petits côtés du rectangle. Le bac de récupération présente un premier plan vertical de symétrie parallèle aux grands côtés du bac et un second plan vertical de symétrie parallèle aux petits côtés du bac qui se croisent au centre du bac, lesdits plans définissent, dans le fond du bac, quatre parties symétriques qui sont limitées, d'une part, par le bord adjacent d'une rigole rectiligne orientée parallèlement le long des grands côtés, d'autre part, par le côté adjacent de la partie symétrique voisine, et enfin des parties adjacentes de la paroi latérale, chaque partie symétrique comporte un dièdre ayant une arête, pratiquement horizontale et perpendiculaire à la rigole, et comportant deux faces dont l'une est pratiquement horizontale et descend légèrement d'une des parties vers l'arête et dont l'autre face monte obliquement de l'arête vers une autre arête.

Selon une autre caractéristique de l'invention, dans le fond de la rigole rectiligne se trouve au moins un trou vertical d'évacuation.

Selon une autre caractéristique de l'invention, une des faces du dièdre a une pente longitudinale et transversale de l'ordre de 3,5 % et l'autre face du dièdre a une pente longitudinale et transversale de l'ordre de 26 %.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est une vue en perspective d'un bac à lisier suivant l'invention,
la Fig. 2 est une vue en plan du bac à lisier de la Fig. 1,
la Fig. 3 est une vue en coupe longitudinale selon la ligne III-III du bac à lisier de la Fig. 2,
la Fig. 4 est une vue en coupe transversale selon la ligne IV-IV du bac à lisier de la Fig. 2, et
la Fig. 5 est une vue en coupe transversale selon la ligne V-V du bac à lisier de la Fig. 2.

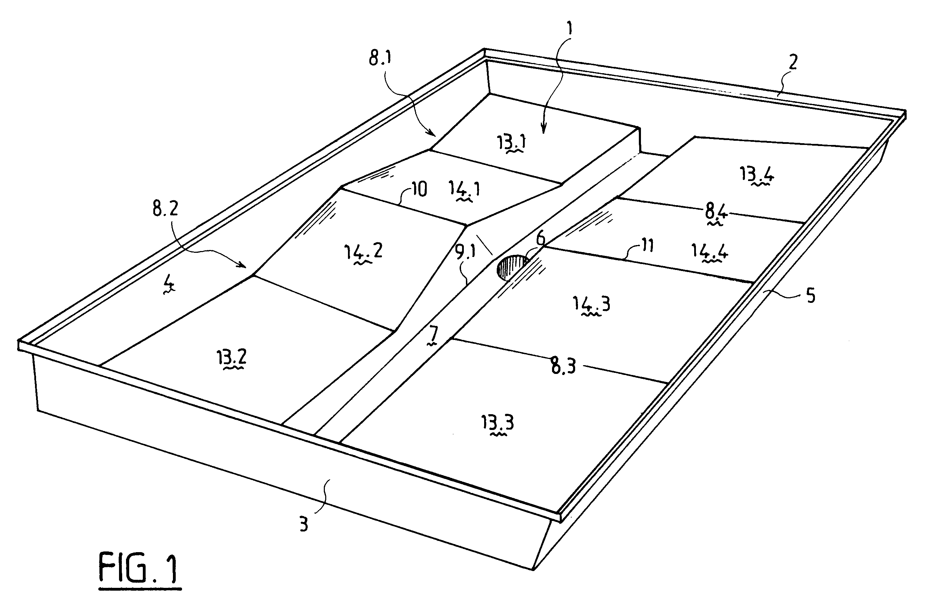

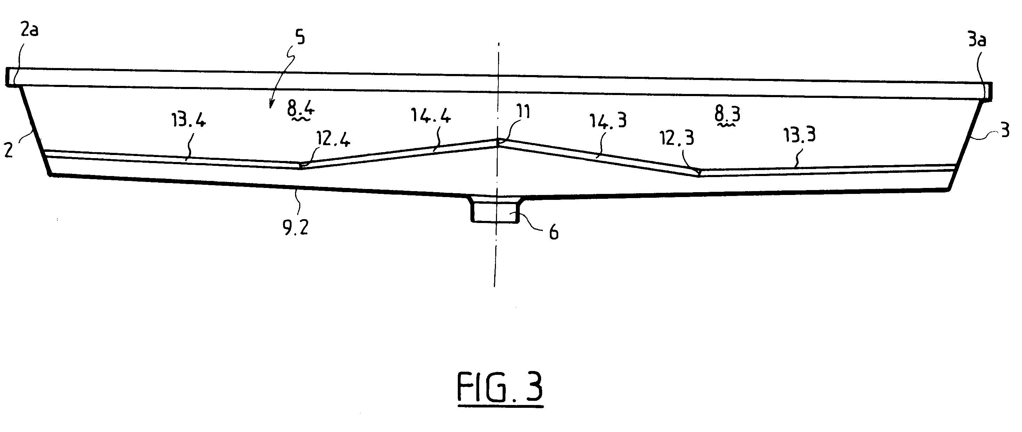

Le bac à lisier, montré en perspective à la Fig. 1, comporte, d'une manière classique, un fond et une paroi latérale. Dans l'exemple de réalisation, vu de dessus, le fond 1 est de forme rectangulaire et la paroi latérale comprend deux parties 2 et 3 le long des grands côtés du rectangle et deux parties 4 et 5 le long des petits côtés du rectangle. Comme le montrent les Figs. 3 à 5, les parties 2 à 4 sont presque verticales, légèrement obliques vers l'extérieur.

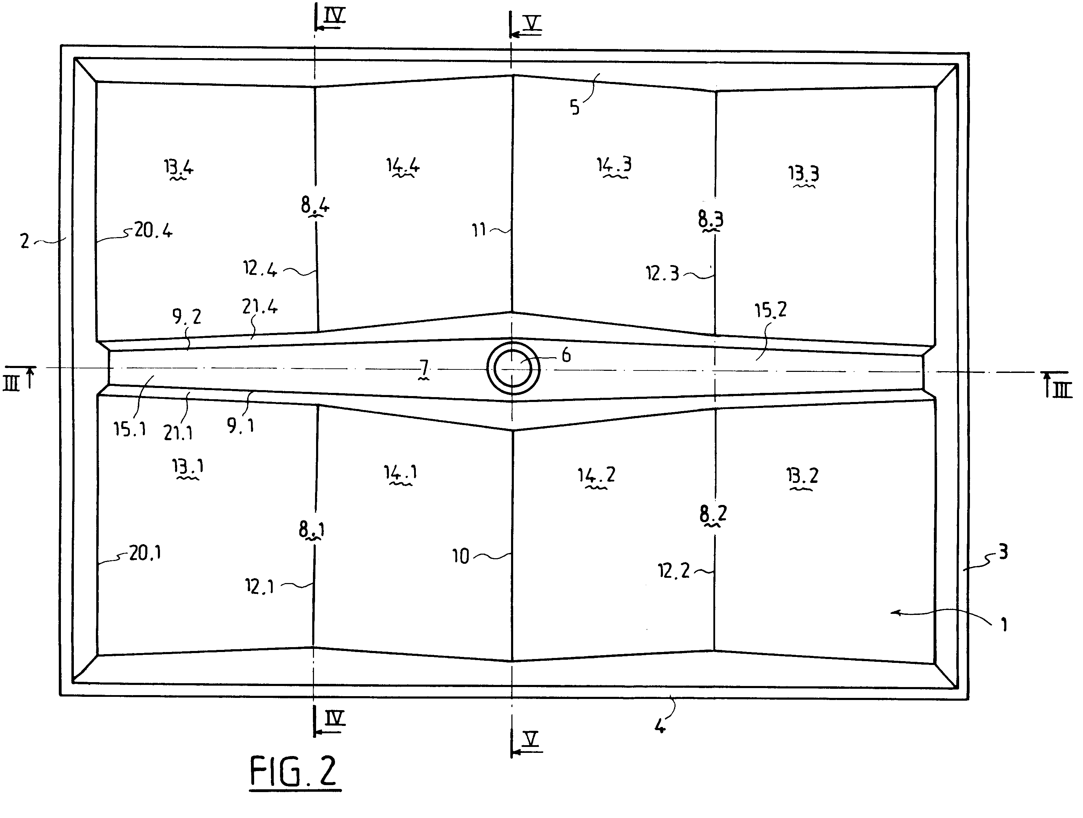

Le fond 1 présente un premier plan vertical de symétrie indiqué par III-III à la Fig. 2 et un second plan vertical de symétrie indiqué par V-V. Le premier plan III-III et le second plan V-V se croisent au centre d'un trou vertical d'évacuation 6 qui se trouve dans une rigole rectiligne 7, orientée suivant la ligne III-III.

Les plans III-III et V-V définissent, dans le fond du bac, quatre zones 8.1, 8.2, 8.3 et 8.4 qui sont, vues de dessus comme le montre la Fig. 2, rectangulaires respectivement limitées, d'une part, par le bord adjacent de la rigole 7, d'autre part, par le côté adjacent de la zone voisine, et enfin des parties adjacentes de paroi latérale.

Ainsi, les limites de la zone élémentaire 8.1 sont le bord 9.1 de la goulotte 7, l'arête 10 mitoyenne avec la zone élémentaire 8.2, la partie 2 et la partie 4 de paroi latérale. Les limites de la zone 8.2 sont le bord 9.1, l'arête 10, la partie 3 et la partie 4 de paroi latérale. Les zones élémentaires 8.3 et 8.4 ont en commun l'arête 11, et sont limitées par le bord 9.2 de la goulotte 7, par la partie 5 de la paroi latérale et, respectivement, par la partie 2 ou 3 de cette paroi.

Les quatre zones 8.1 à 8.4 ont des formes symétriques par rapport à l'axe central du trou 6. La zone 8. 1 est formée par un dièdre ayant une arête 12.1, pratiquement horizontale et perpendiculaire à la rigole 7, et comporte deux faces dont l'une 13.1 est pratiquement horizontale et descend légèrement de la partie 2 vers l'arête 12.1 et dont l'autre face 14.1 monte obliquement de l'arête 12.1 vers l'arête 10. Dans les zones 8.2 à 8.4, on a respectivement les arêtes de dièdre 12.2 à 12.4, les faces pratiquement horizontales 13.2 à 13.4 et les faces obliques 14.2 à 14.4.

Dans la coupe de la Fig. 3, on peut voir, de face, la partie 5 de la paroi latérale et, de profil, les parties 2 et 3, les faces pratiquement horizontales 13.3 et 13.4 et les faces obliques 14.3 et 14.4 respectivement des zones 8.3 et 8.4, les arêtes 12.3 et 12.4 ainsi que l'arête 11 commune aux deux zones 8.3 et 8.4. On peut constater, sur cette Fig. 3, que les faces 13.3 et 13.4 descendent obliquement avec une pente légère, respectivement, de la partie 2 et de la partie 3 vers les arêtes 12.3 et 12.4 des dièdres des zones 8.3 et 8.4 et, également, de la partie 5 vers la rigole 7. De même, on peut constater que les faces 14.3 et 14.4 montent respectivement des arêtes 12.3 et 12.4 des dièdres des zones 8.3 et 8.4 vers l'arête commune 11 et que les mêmes faces descendent de la partie 5 vers la igole 7.

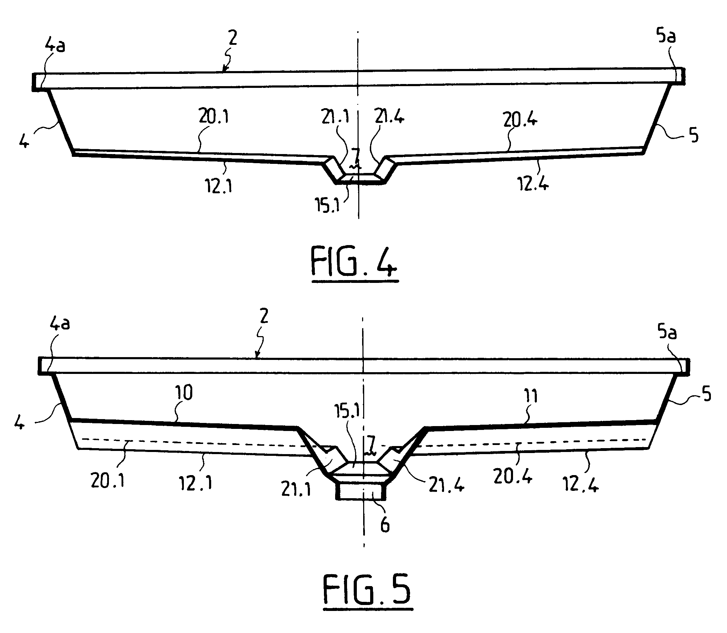

Dans la coupe de la Fig. 4, faite selon la ligne IV-IV de la Fig. 2, on peut voir, de face, la partie 2 de paroi latérale et, de profil, les parties 4 et 5, les parties hautes 20.1 et 20.4 des faces 13.1 et 13.4 (également visibles sur la Fig. 2) adjacentes à la partie 2, les arêtes 12.1 et 12.4, et le fond descendant 15.1 de la rigole 7, avec les faces latérales 21.1 et 21.4 de celle-ci (également visibles sur la Fig. 2).

Dans la coupe de la Fig. 5, faite selon la ligne V-V de la Fig. 2, on peut voir, de face, la partie 2 et, de profil, les parties 4 et 5, en bas, les arêtes 12.1 et 12.4, et, en haut, les arêtes 10 et 11, le fond descendant 15.1 de la rigole 7 et les faces latérales 21.1 et 21.4 de la rigole 7. On peut voir également, en pointillés, les arêtes 20.1 et 20.4.

On a représenté le trou 6 muni d'un rebord supérieur tronconique. Par ailleurs, on peut voir que les côtés 2 à 5 de la paroi latérale se terminent, en haut, par un rebord 2a à 5a sur lequel peuvent reposer les côtés latéraux d'un caillebotis constituant le plancher de la case destinée à des porcelets, notamment pendant la phase de post-sevrage.

Les pentes longitudinales et transversales des faces 13.1 à 13.4 sont légères de l'ordre de 3,5 %, comme celles des fonds 15.1 et 15.2 qui est de l'ordre de 2,9 % pour assurer un écoulement facile du lisier vers le trou 6. Les pentes transversales des faces 14.1 à 14.4 sont du même ordre, c'est-à-dire environ 3,3 %, par contre les pentes longitudinales des faces 14.1 et 14.4 sont plus prononcées, de l'ordre de 26 %, de manière que l'urine des porcelets ait tendance à former un courant partant des arêtes 10 et 11 vers les coins externes des faces 13.1 à 13.4, donc à y entraîner les déchets solides qui s'y trouvent. On sait que c'est l'objet principal de l'invention car les porcelets ont tendance à déposer leurs excréments solides dans les coins externes de leur case.

On notera que le trou 6 a un diamètre de 100 mm ou de 125 mm de manière à s'adapter à des canalisations d'évacuations standard.

## Revendications

**1)** Bac de récupération de lisier comportant un fond rectangulaire (1) et une paroi latérale pourvue de deux parties (2) et (3) le long des grands côtés du rectangle et deux parties (4) et (5) le long des petits côtés du rectangle, présentant un premier plan vertical de symétrie parallèle aux grands côtés (4, 5) du bac et un second plan vertical de symétrie parallèle aux petits côtés (2, 3) du bac qui se croisent au centre du bac, caractérisé en ce que lesdits plans définissent, dans le fond du bac quatre parties symétriques qui sont limitées, d'une part, par le bord adjacent d'une rigole rectiligne (7) orientée parallèlement le long des grands côtés, d'autre part, par le côté adjacent de la partie symétrique voisine, et enfin des parties adjacentes de la paroi latérale, chaque partie symétrique comporte un dièdre ayant une arête (12.1, 12.2, 12.3 et 12.4), pratiquement horizontale et perpendiculaire à la rigole (7) et comportant deux faces dont l'une (13.1, 13.2, 13.3 et 13.4) est pratiquement horizontale et descend légèrement de la partie (2, 3) vers l'arête (12.1, 12.1, 12.2, 12.3 et 12.4) et dont l'autre face (14.1, 14.2, 14.3 et 14.4) monte obliquement de l'arête (12.1, 12.2, 12.3 et 12.4) vers l'arête (10, 11) appartenant au plan de symétrie parallèle aux petits côtés.

**2)** Bac de récupération selon la revendication 1, caractérisé en ce que dans le fond de la rigole rectiligne (7) se trouve au moins un trou vertical d'évacuation (6).

**3)** Bac de récupération selon la revendication 2, caractérisé en ce qu'au centre du fond (1) dans la rigole rectiligne (7) se trouve un trou vertical d'évacuation (6).

**4)** Bac de récupération selon la revendication 2 ou 3, caractérisé en ce que le trou vertical d'évacuation (6) est muni d'un rebord supérieur tronconique.

**5)** Bac de récupération selon la revendication 1, caractérisé en ce que les faces (13. 1 à 13.4) ont des pentes longitudinales et transversales de l'ordre de 3,5 %.

**6)** Bac de récupération selon la revendication 1, caractérisé en ce que les faces (14.1 à 14.4) ont des pentes longitudinales et transversales de l'ordre de 26 %.

**7)** Bac de récupération selon la revendication 1, caractérisé en ce que chaque côté (2, 3, 4 et 5) de la paroi latérale se termine, en haut, par un rebord (2a, 3a, 4a et 5a), sur lequel peuvent reposer les côtés latéraux d'un caillebotis.
